# EUROPÄISCHE PATENTSCHRIFT

(11) **EP 3 517 592 B1**
(45) Veröffentlichungstag und Bekanntmachung des Hinweises auf die Patenterteilung: **07.08.2024**
(21) Anmeldenummer: 18154018.8
(22) Anmeldetag: 30.01.2018
(51) Int. Cl.: C10L 9/06, C10L 5/36, C10L 5/44

(54) **SYSTEM UND VERFAHREN ZUM HERSTELLEN VON BIOMASSE-PELLETS**
SYSTEM AND METHOD FOR THE PREPARATION OF BIOMASS PELLETS
SYSTÈME ET PROCÉDÉ DE FABRICATION DE GRANULÉS DE BIOMASSE

(43) Veröffentlichungstag der Anmeldung: 31.07.2019
(73) Patentinhaber: Amandus Kahl GmbH & Co. KG, 21465 Reinbek (DE)
(72) Erfinder: Sitzmann, Werner, 21075 Hamburg (DE)
(74) Vertreter: Glawe, Delfs, Moll

(56) Entgegenhaltungen:
- EP-A1- 2 765 178
- EP-A2- 1 783 195
- WO-A1-2016/163877
- US-A1- 2017 246 759

## Beschreibung

Die Erfindung betrifft ein System und ein Verfahren zum Herstellen von Biomasse-Pellets.

Biomasse-Pellets, insbesondere Holzpellets werden heute verbreitet als Brennstoff eingesetzt, weil damit der Verbrauch von fossilen Brennstoffen vermindert werden kann. Nachdem die Verwendung von Biomasse-Pellets in der Anfangszeit in erster Linie auf häusliche Brennstellen reduziert war, werden Biomasse-Pellets heute in zunehmendem Umfang in Kraftwerken bei der Erzeugung von elektrischem Strom verfeuert. Kraftwerke können auf die alleinige Verwendung von Biomasse-Pellets ausgelegt sein. Möglich ist auch, in herkömmlichen Kraftwerken die Biomasse-Pellets dem fossilen Brennstoff beizugeben (Co-Firing) .

Im Zuge dieser Entwicklung vergrößert sich die Menge der zu lagernden und zu transportierenden Biomasse-Pellets stetig. So werden beispielsweise große Mengen von in den USA und in Kanada hergestellten Holzpellets in europäischen Kraftwerken eingesetzt. Der Transport der Pellets über den Atlantik erfolgt in Großgebinden auf Schiffen.

Werden Pellets in großen Massen transportiert, gelagert oder umgeschlagen, so kann es zu einer Selbstentzündung der Pellets kommen, was erhebliche Brandschäden zur Folge haben kann. Es wird angenommen, dass die Selbstentzündung verursacht wird durch Oxidationsreaktionen innerhalb der Pellets, bei denen Wärme freigesetzt wird. Durch Selbsterwärmung können sich Hotspots innerhalb der Pellet-Haufwerke bilden, in denen die Entzündungstemperatur der Pellets überschritten wird.

Die WO 2016/163877 A offenbart eine Vorrichtung zum Herstellen von Biomasse-Pellets, die eine mehrstufige Zerkleinerungsvorrichtung umfassend eine Nasszerkleinerungsstufe, einen Trockner und eine Pelletpresse umfasst. Bevorzugt zur Nasszerkleinerung ist eine Kollermühle, bezeichnet als "edge mill crushing/ grinding mechanism" (Kollergang). Der Trockner umfasst ein Gebläse für Luft. Außerdem kann ein Zwischenlager vorhanden sein.

Der Erfindung liegt die Aufgabe zugrunde, ein Verfahren und ein System vorzustellen, mit denen Biomasse-Pellets mit einer verminderten Selbstentzündungsgefahr hergestellt werden können. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Das erfindungsgemäße System umfasst eine Kollermühle zum Zerkleinern eines Biomasse-Materials, eine Behandlungseinrichtung, mit der das zerkleinerte Biomasse-Material mit einem oxidierenden Reaktionsstoff behandelt wird, und eine Pelletpresse, um aus dem behandelten Biomasse-Material Pellets zu pressen.

Die Erfindung beruht auf dem Gedanken, bestimmte Oxidationsreaktionen gezielt bereits vor dem Pressen der Pellets ablaufen zu lassen, sodass diese Reaktionen in einem späteren Pellet-Haufwerk keine unerwünschte Erwärmung mehr bewirken können. Mit der Erfindung wird vorgeschlagen, zum Zerkleinern des Biomasse-Materials eine Kollermühle zu verwenden. Die Erfindung hat erkannt, dass das Biomasse-Material durch die Kollermühle in einen Zustand gebracht wird, in dem eine Behandlung mit einem oxidierenden Reaktionsstoff besonders wirksam ist.

Durch die Verwendung einer Kollermühle unterscheidet das erfindungsgemäße System von den bislang üblichen Systemen, bei denen zum Zerkleinern des Biomasse-Materials eine Hammermühle verwendet wird. Bei einer Hammermühle wird mit einem Hammerelement auf grobe Stücke des Biomasse-Materials eingeschlagen, um das Biomasse-Material in kleinere Stücke zu zerteilen. Durch die Hammerschläge werden in sich kompakte Bruchstücke in Form von Spänen erzeugt.

Im Unterschied dazu rollen bei einer Kollermühle Kollerrollen auf einer Laufbahn einer Lochmatrize ab. Die groben Stücke des Biomasse-Materials werden zwischen den Kollerrollen und der Lochmatrize bearbeitet und treten als kleinere Stücke von überwiegend faserigem Zustand durch die Öffnungen der Lochmatrize hindurch. Die Zerkleinerungswirkung ergibt sich bei einer Kollermühle zu einem wesentlichen Teil aus Scherkräften, die zwischen den Kollerrollen und der Lochmatrize auf das Biomasse-Material wirken. Unter dem Einfluss der Scherkräfte wird das Biomasse-Material in kleinere Stücke von überwiegend faseriger Struktur zerlegt. Durch die überwiegend faserige Struktur haben die Stücke eine im Verhältnis zu ihrer Masse große Oberfläche, wodurch sie besonders empfänglich für eine Reaktion mit einem oxidierenden Reaktionsstoff sind.

Die Lochmatrize der Kollermühle kann eine Flachmatrize sein, auf der die Kollerrollen in einer Ebene abrollen. Die Löcher der Flachmatrize können parallel zueinander ausgerichtet sein. Im Betrieb der Kollermühle können die Löcher sich in vertikaler Richtung erstrecken. Auf der Flachmatrize kann eine Laufbahn für die Kollerrollen ausgebildet sein, die sich kreisförmig um eine zentrale Achse der Flachmatrize erstrecken kann. Die Kollermühle kann eine Antriebswelle umfassen, die entlang der zentralen Achse der Flachmatrize ausgerichtet ist. Die Drehachse der Kollerrolle kann rechtwinklig zu der Antriebswelle ausgerichtet sein. Die Kollerrollen können zylinderförmig sein. Die Kollermühle kann eine Mehrzahl von Kollerrollen umfassen, die insbesondere über den Umfang der Antriebswelle gleichverteilt sein können.

Bei einer solchen Kollermühle haben radial außen liegende Abschnitte der Kollerrollen eine größere Bahngeschwindigkeit relativ zu der Lochmatrize als radial innen liegende Abschnitte der Kollerrollen. Durch die unterschiedlichen Relativgeschwindigkeiten über die Breite der Kollerrollen ergeben sich starke Scherkräfte, die zu der gewünschten überwiegend faserigen Struktur der zerkleinerten Stücke des Biomasse-Materials führen.

Durch die überwiegend faserige Struktur des zerkleinerten Biomasse-Materials ist eine besonders intensive Wechselwirkung mit dem oxidieren Reaktionsmittel möglich. Ohne an die These gebunden zu sein, wird vermutet, dass die Selbstentzündung von Pellets durch bestimmte Autoxidationsreaktionen innerhalb der Pellets hervorgerufen wird. Wenn solche im Inneren eines Pellet-Haufwerks unkontrolliert ablaufende Reaktionen zumindest teilweise während des Verfahrens zur Herstellung von Pellets ablaufen können, wird einer Selbstentzündung der fertigen Pellets während einer nachfolgenden Lagerung oder einem nachfolgenden Transport entgegengewirkt.

Der oxidierende Reaktionsstoff kann in flüssigem Zustand mit dem zerkleinerten Biomasse-Material in Kontakt gebracht werden. Beispielsweise kann der oxidierende Reaktionsstoff auf das Biomasse-Material aufgesprüht werden. Ein Beispiel für einen oxidierenden Reaktionsstoff, der in flüssiger Form vorliegt, ist Wasserstoffperoxid. Das Wasserstoffperoxid kann verdünnt sein, beispielsweise in Wasser, wobei der Anteil des Wasserstoffperoxids in der Lösung beispielsweise zwischen 20 % und 50 % liegen kann. Die Menge der zugeführten Lösung kann beispielsweise zwischen 0,5 Gew.-% und 2 Gew.-% bezogen auf das Gewicht der Biomasse-Pellets liegen.

Möglich ist auch, den oxidierenden Reaktionsstoff in gasförmigem Zustand mit dem zerkleinerten Biomasse-Material in Kontakt zu bringen. Hierbei wird ein Gasstrom auf das zerkleinerte Biomasse-Material gerichtet, der einen Teilstrom aus ionisierter Atmosphäre umfasst oder der vollständig aus ionisierter Atmosphäre besteht. Die ionisierte Atmosphäre kann beispielsweise Ozon umfassen oder aus Ozon bestehen, wobei es sich insbesondere um kurzlebiges Ozon handeln kann.

Wird einer der Zerkleinerungsschritte in einer Hammermühle durchgeführt, so kann der gasförmige oxidierende Reaktionsstoff dem Feststoff zugeführt werden, kurz nachdem das Biomasse-Material die Hammermühle verlassen hat. Dies bietet sich insbesondere an, wenn wie bei Hammermmühlen oft üblich, das Material auf pneumatischem Wege aus der Hammermühle abtransportiert wird (Aspiration). Der Gasstrom aus der Hammermühle, mit dem das Material in Bewegung versetzt wird, kann mit dem oxidierenden Reaktionsstoff versehen sein.

Die Behandlungseinrichtung kann als Lagervorrichtung oder als Transportvorrichtung für das zerkleinerte Biomasse-Material ausgestaltet sein. Dabei kann es sich um eine separate Lager-/Transporteinrichtung handeln, mit denen das erfindungsgemäße System gezielt zum Zwecke der Behandlung mit dem oxidierenden Reaktionsstoff ausgestattet wird. Möglich ist auch, die Behandlung in einer Lager-/Transporteinrichtung durchzuführen, die bei einem System zum Herstellen von Pellets ohnehin vorhanden sind. In diesem Falle kann es sich beispielsweise um eine Einrichtung handeln, in der das zerkleinerte Biomasse-Material getrocknet wird.

Wird der oxidierende Reaktionsstoff in flüssiger Form zugegeben, so kann der Reaktionsstoff durch Aufsprühen mit dem zerkleinerten Biomasse-Material in Kontakt gebracht werden. Die Behandlungseinrichtung kann eine Sprühvorrichtung umfassen, die für diesen Zweck ausgelegt ist. Wird der oxidierende Reaktionsstoff in gasförmigem Zustand mit dem zerkleinerten Biomasse-Material in Kontakt gebracht, so kann das System eine Düse oder eine Öffnung umfassen, durch die der betreffende Gasstrom auf das Biomasse-Material gerichtet werden kann.

In einer Ausführungsform umfasst das System eine Transporteinrichtung für das zerkleinerte Biomasse-Material in Form einer pneumatischen Fördereinrichtung. Die pneumatische Fördereinrichtung kann ein Rohr umfassen, in dem als Förderstrom ein schneller Gasstrom erzeugt wird, der das Biomasse-Material mit sich führt. Der oxidierende Reaktionsstoff kann dem Förderstrom als Teilstrom zugesetzt werden.

Von aus Biomasse-Pellets wird im Sinne der Erfindung gesprochen, wenn das Ausgangsmaterial, aus dem die Pellets gepresst werden, überwiegend Biomasse ist. Es ist nicht ausgeschlossen, dass dem Ausgangsmaterial andere Stoffe, wie etwa Abfälle, beigemengt sind. Der Anteil dieser anderen Stoffe sollte kleiner sein als 30%. Nach dem Pressvorgang haben die Pellets eine höhere Dichte als das Ausgangsmaterial. Der Begriff Biomasse umfasst beispielsweise alle halm- und holzartigen nachwachsenden Rohstoffe sowie deren Mischungen. Insbesondere werden Holz und/oder Stroh als Rohstoffe verwendet. Bevorzugt ist, dass die Biomasse als Rohstoff Holz umfasst, insbesondere wenigstens 50% Holz umfasst. Die Pellets können vollständig aus Biomasse bestehen.

Das Verfahren kann so durchgeführt werden, dass das Biomasse-Material grob vorzerkleinert ist, bevor es dem erfindungsgemä-ßen System als Ausgangsmaterial zugeführt wird. Beispielsweise kann das Biomasse-Ausgangsmaterial durch einen Häcksler gegangen sein, sodass es als Ausgangsmaterial für das erfindungsgemäße System in Form grober Hackschnitzel vorliegt.

Bei dem erfindungsgemäßen Verfahren können ein oder mehrere Zerkleinerungsschritte durchgeführt werden. In einer Ausführungsform wird das Ausgangsmaterial in einem ersten Zerkleinerungsschritt bis auf eine spanartige Größe zerkleinert. In einem zweiten Zerkleinerungsschnitt können die spanartigen Bestandteile des Biomasse-Materials weiter zerkleinert werden. Nachfolgend zu dem zweiten Zerkleinerungsschritt kann das Biomasse-Material einer Pelletpresse zugeführt werden.

Das erfindungsgemäße System kann so ausgestaltet sein, dass jeder Zerkleinerungsschritt mit einer Kollermühle durchgeführt wird. Jede der Kollermühlen kann die genannten Merkmale einer Kollermühle aufweisen. Möglich ist auch, das erfindungsgemäße System so zu gestalten, dass ein Teil der Zerkleinerungsschritte mit einer Kollermühle und ein Teil der Zerkleinerungsschritte mit einer anderen Art von Vorrichtung durchgeführt wird. Beispielsweise kann das erfindungsgemäße System für einen der Zerkleinerungsschritte eine Kollermühle und für einen anderen der Zerkleinerungsschritte eine Hammermühle umfassen.

Das Ausgangsmaterial kann einen Feuchtegehalt von beispielsweise 40 bis 50 Gew.-% haben. Der erste Zerkleinerungsschritt kann durchgeführt werden, wenn das Biomasse-Material einen Feuchtegehalt in dieser Größenordnung hat. An die erste Zerkleinerung kann sich ein Trocknungsschritt anschließen, mit dem der Feuchtegehalt auf beispielsweise 10 bis 15 Gew.-% reduziert wird. Das erfindungsgemäße System kann einen entsprechenden Trockner umfassen, der auf die erste Zerkleinerungsvorrichtung folgt. An den Trockner kann sich eine zweite Zerkleinerungsvorrichtung anschließen.

Es hat sich gezeigt, dass das Biomasse-Material eine für die Behandlung mit dem oxidierenden Reaktionsstoff besonders günstige Form erhält, wenn die Zerkleinerung mit der Kollermühle erfolgt, wenn das Biomasse-Material einen Feuchtegehalt von wenigstens 20 Gew.-%, vorzugsweise von wenigstens 30 Gew.-% hat. Das erfindungsgemäße System kann deswegen so eingerichtet sein, dass der erste Zerkleinerungsschritt mit einer Kollermühle erfolgt. Insbesondere kann das Biomasse-Ausgangsmaterial der Kollermühle ohne vorherige Trocknung zugeführt werden.

Die Behandlung mit dem oxidierenden Reaktionsstoff findet bei einer Ausführungsform nach dem Trocknen und vor dem zweiten Zerkleinerungsschritt statt. Es hat sich gezeigt, dass die Wirkung des oxidierenden Reaktionsstoffs nach dem Trocknen besser ist als bei dem feuchten Ausgangsmaterial. Bei dem erfindungsgemäßen System kann deswegen zwischen der Kollermühle und der Behandlungseinrichtung ein Trockner angeordnet sein.

Möglich ist auch, dass die Behandlung mit dem oxidierenden Reaktionsstoff nach dem zweiten Zerkleinerungsschritt folgt. Ist die Behandlungseinrichtung eine pneumatische Fördereinrichtung, so ist die Behandlungseinrichtung bevorzugt nach dem zweiten Zerkleinerungsschritt angeordnet.

Nach der Behandlung mit dem oxidierenden Reaktionsstoff und vor der weiteren Verarbeitung in der Pelletpresse kann das Biomasse-Material in einem Zwischenbehälter gelagert werden, damit eine ausreichende Zeit für die Oxidationsreaktionen bleibt, die durch den oxidierenden Reaktionsstoff ausgelöst werden. Eine solche Lagerung kann sich beispielsweise über einen Zeitraum zwischen 0,5h und 18h, vorzugsweise zwischen 1h und 12h erstrecken. Eine solche Lagerung kann insbesondere dann von Vorteil sein, wenn der oxidierende Reaktionsstoff dem Biomasse-Material in flüssiger Form zugeführt wird. Das erfindungsgemäße System kann deswegen einen zwischen der Behandlungseinrichtung und der Pelletpresse angeordnetes Zwischenbehälter umfassen.

Die Erfindung betrifft außerdem ein Verfahren zum Herstellen von Biomasse-Pellets, bei dem ein Biomasse-Material mit einer Kollermühle zerkleinert wird, bei dem das zerkleinerte Biomasse-Material mit einem oxidierenden Reaktionsstoff behandelt wird, und bei dem aus dem behandelten Biomasse-Material Pellets gepresst werden.

Das System kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Systems beschrieben sind.

Die Erfindung wird nachfolgend unter Bezugnahme auf die beigefügten Zeichnungen anhand vorteilhafter Ausführungsformen erläutert. Es zeigen:
- Fig. 1:: eine schematische Darstellung eines erfindungsgemäßen Systems;
- Fig. 2:: eine Kollermühle eines erfindungsgemäßen Systems;
- Fig. 3:: eine alternative Ausführungsform eines erfindungsgemäßen Systems.

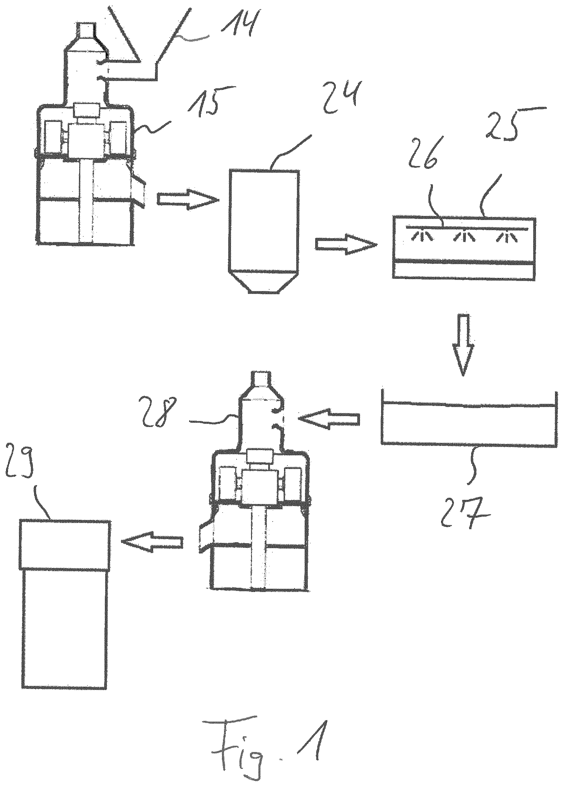

Dem in Fig. 1 gezeigten System zum Herstellen von Biomasse-Pellets wird ein Biomasse-Ausgangsmaterial in grob vorzerkleinertem Zustand in Form von Hackschnitzeln zugeführt. Die Hackschnitzel können zu einem überwiegenden Teil oder vollständig aus einem Holzmaterial erzeugt sein.

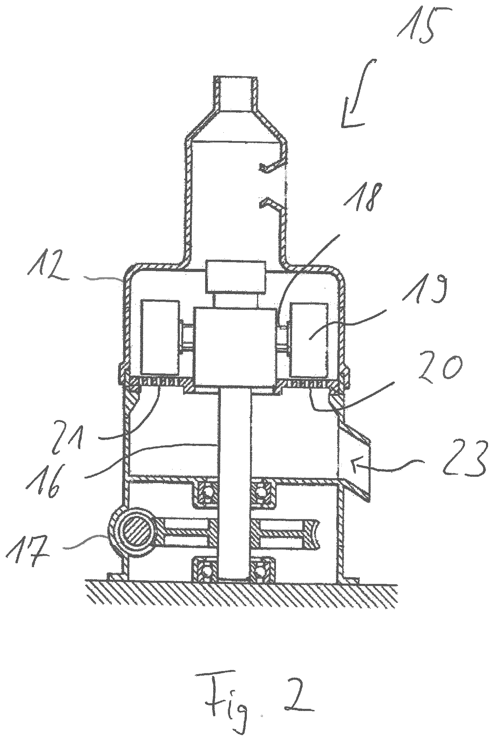

Die Zufuhr des Biomasse-Ausgangsmaterials erfolgt über einen Einfülltrichter 14 einer ersten Kollermühle 15. Das Material fällt, wie die vergrößerte Darstellung der Kollermühle 15 in Fig. 2 zeigt, auf die Oberseite einer Lochmatrize 20 und wird dort durch von den Kollerrollen 19 ausgeübten Druck und Scherkräfte zerkleinert. Das Biomasse-Material erhält die Form von überwiegend faserigen Spänen, die durch Löcher 21 in der Lochmatrize 20 hindurchtreten, sobald sie genügend klein sind. Durch eine Auslassöffnung 23 kann das Biomasse-Material die erste Kollermühle 15 verlassen.

Der Aufbau der Kollermühle 15 ist wie folgt. Ein auf dem Boden stehendes Maschinengehäuse 12 trägt eine als Königswelle gestaltete Antriebswelle 16, die in dem Maschinengehäuse 12 drehbar gelagert ist. Über einen Antrieb 17 kann die Antriebswelle 16 mit einem nicht dargestellten Antriebsmotor in Drehung versetzt werden. Mit der Antriebswelle 16 verbunden sind horizontale Achszapfen 18. Auf jedem Achszapfen 18 ist eine Kollerrolle 19 drehbar gelagert.

Die Kollerrollen 19 laufen auf der Oberseite der Lochmatrize 20, die mit einer Vielzahl von Löchern 21 versehen ist. Die Löcher 21 erstrecken sich von einem den Kollerrollen 19 zugewandten Einlassende durch die Lochmatrize 20 hindurch bis zu einem Auslassende auf der Unterseite der Lochmatrize 20. Wenn die Antriebswelle 16 sich dreht, bewegen die Kollerrollen 19 sich entlang einer kreisförmigen Laufbahn auf der Oberseite der Matrize 20.

Das der ersten Kollermühle 15 zugeführte Biomasse-Ausgangsmaterial kann einen Feuchtegehalt von beispielsweise 40 bis 50 Gew.-% haben. Durch den Zerkleinerungsvorgang in der ersten Kollermühle 15 ändert der Feuchtegehalt sich nicht wesentlich, sodass der Feuchtegehalt der am Ausgang der ersten Kollermühle 15 austretenden überwiegend faserigen Späne in derselben Größenordnung liegt.

An die erste Kollermühle 15 schließt sich ein Trockner 24 an, mit dem der Feuchtegehalt des Biomasse-Materials auf beispielsweise 10 bis 15 Gew.-% gesenkt wird. Auf den Trockner 24 folgt eine Behandlungseinrichtung 25, in der das Biomasse-Material mit einem oxidierenden Reaktionsstoff behandelt wird.

Die Behandlungseinrichtung 25 kann als Zwischenbehälter ausgebildet sein, in dem das Biomasse-Material großflächig verteilt ist, sodass die Oberfläche des Biomasse-Materials gut zugänglich ist. Möglich ist auch, dass die Einrichtung 25 eine Transporteinrichtung ist, auf der das Biomasse-Material beispielsweise auf einem Laufband befördert wird. Auf dem Laufband kann das Biomasse-Material so verteilt sein, dass die Oberfläche des Biomasse-Materials gut zugänglich ist.

Die Lager-/Transporteinrichtung 25 umfasst eine Sprühvorrichtung 26, aus der das Biomasse-Material mit einem oxidierenden Reaktionsstoff in flüssiger Form besprüht werden kann. Bei dem oxidierenden Reaktionsstoff kann es sich beispielsweise um Wasserstoffperoxid handeln, das mit Wasser verdünnt ist, sodass der Anteil von Wasserstoffperoxid in der Lösung bei beispielsweise 30 % liegt. Die Menge der verteilten Lösung kann beispielsweise bei 1 Gew.-% bezogen auf das Gewicht des Biomasse-Materials sein. Aufgrund der großflächigen Verteilung des Biomasse-Materials kann der oxidierende Reaktionsstoff in wesentlichen Teilen des Biomasse-Materials Oxidationsreaktionen auslösen. Diese Oxidationsreaktionen, die bereits während der Herstellung der Pellets ablaufen, stehen nicht mehr zur Verfügung, um in einem späteren Pellet-Haufwerk eine Erwärmung zu bewirken.

An die Behandlung mit dem oxidierenden Reaktionsstoff in der Lager-/Transporteinrichtung 25 schließt sich eine Ruhephase von einigen Stunden an, in der die durch den Reaktionsstoff angestoßenen Oxidationsreaktionen ablaufen können. In Fig. 1 ist dies schematisch durch einen Zwischenlager 27 angedeutet.

Das auf diese Weise behandelte Biomasse-Material wird in einer zweiten Kollermühle 28 weiter zerkleinert. Die zweite Kollermühle 28 unterscheidet sich von der ersten Kollermühle 15 dadurch, dass die Löcher 21 in der Lochmatrize 20 einen kleineren Durchmesser haben. Das Biomasse-Material wird in kleinere überwiegend faserige Bestandteile zerlegt, bevor es durch die Löcher 21 der zweiten Kollermühle 28 hindurchtreten kann.

Nach dem zweiten Zerkleinerungsvorgang kann das Biomasse-Material in einer Pelletpresse 29 zu Pellets gepresst werden. Dafür können übliche Pelletpressen verwendet werden, bei denen das Biomasse-Material beispielsweise durch eine Ringmatrize oder eine Flachmatrize gepresst wird. Es gibt Pelletpressen, die in ihrem Aufbau eine gewisse Ähnlichkeit zu den Kollermühlen 15, 28 haben. Diese Pelletpressen unterscheiden sich von den Kollermühlen 15, 28 dadurch, dass die Durchtrittskanäle in der Flachmatrize eine deutlich größere Länge haben als die Löcher 21 in der Lochmatrize 20. Durch die Löcher 21 in der Lochmatrize 20 kann das Biomasse-Material nach hinreichender Zerkleinerung hindurchtreten, ohne weiter komprimiert zu werden. Bei der Pelletpresse ist die Reibung an den Kanalwänden so groß, dass das Material zu Pellets komprimiert wird.

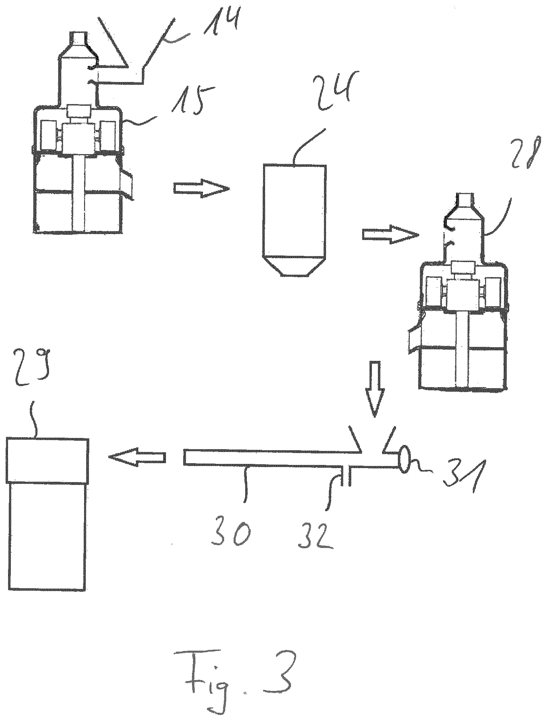

Bei der alternativen Ausführungsform gemäß Fig. 3 folgt die zweite Kollermühle 28 unmittelbar auf den Trockner 24. Das Biomasse-Material tritt in weiter zerkleinerter Form aus der zweiten Kollermühle 28 aus und wird mit einer pneumatischen Fördereinrichtung 30 zu der Pelletpresse 29 transportiert. Die pneumatische Fördereinrichtung 30 umfasst ein Gebläse 31, mit dem ein Luftstrom erzeugt wird, der so schnell ist, dass er die Bestandteile des Biomasse-Materials mit sich führt.

Durch eine Öffnung 32 wird diesem Luftstrom ein Teilstrom an ionisierter Luft zugesetzt, beispielsweise in Form von Ozon. Das Ozon wirkt als oxidierender Reaktionsstoff auf die überwiegend faserigen Bestandteile des Biomasse-Materials. Da die überwiegend faserigen Bestandteile des Biomasse-Materials klein sind und sich durch die pneumatische Förderung ein intensiver Kontakt zwischen dem Ozon und den überwiegend faserigen Bestandteilen ergibt, reicht eine kürzere Behandlungsdauer als bei der Ausführungsform gemäß Fig. 1 aus, um die gewünschte Wirkung zu erzielen. In dem Biomasse-Material laufen Oxidationsreaktionen ab, die dann nicht mehr zur Verfügung stehen, um in einem späteren Pellet-Haufwerk eine Erwärmung zu bewirken.

## Patentansprüche

1. System zum Herstellen von Biomasse-Pellets, umfassend eine Kollermühle (15, 28) zum Zerkleinern eines Biomasse-Materials, eine Behandlungseinrichtung (25, 30), wobei die Behandlungseinrichtung (25, 30) dazu ausgelegt ist, das zerkleinerte Biomasse-Material mit einem oxidierenden Reaktionsstoff zu behandeln, wobei die Behandlungseinrichtung (25) eine Sprühvorrichtung (26) umfasst, die geeignet ist, um den oxidierenden Reaktionsstoff in flüssiger Form mit dem zerkleinerten Biomasse-Material in Kontakt zu bringen, oder wobei die Behandlungseinrichtung (25) dazu ausgelegt ist, einen Gasstrom auf das zerkleinerte Biomasse-Material zu richten, der einen Teilstrom aus ionisierter Atmosphäre umfasst oder der vollständig aus ionisierter Atmosphäre besteht, und eine Pelletpresse (29), um aus dem behandelten Biomasse-Material Pellets zu pressen.

2. System nach Anspruch 1, **dadurch gekennzeichnet, dass** die Kollermühle (15, 18) eine Lochmatrize (20) in Form einer Flachmatrize umfasst.

3. System nach einem der Ansprüche 1 bis 2, **dadurch gekennzeichnet, dass** die Behandlungseinrichtung (25, 30) dazu ausgelegt ist, das zerkleinerte Biomasse-Material mit Wasserstoffperoxid zu behandeln.

4. System nach Anspruch 1 oder 2, **dadurch gekennzeichnet, dass** die Behandlungsvorrichtung (30) eine Öffnung (32) aufweist, die geeignet ist, um den oxidierenden Reaktionsstoff in gasförmigem Zustand mit dem Biomasse-Material in Kontakt zu bringen.

5. System nach einem der Ansprüche 1 bis 4, **dadurch gekennzeichnet, dass** die Behandlungseinrichtung (25, 30) dazu ausgelegt ist, das zerkleinerte Biomasse-Material mit Ozon zu behandeln.

6. System nach Anspruch 4 oder 5, **dadurch gekennzeichnet, dass** die Behandlungsvorrichtung (30) als pneumatische Fördereinrichtung ausgestaltet ist.

7. System nach einem der Ansprüche 1 bis 6, **dadurch gekennzeichnet, dass** zwischen der Kollermühle (15) und der Behandlungseinrichtung (25) ein Trockner (24) angeordnet ist.

8. System nach einem der Ansprüche 1 bis 7, **dadurch gekennzeichnet, dass** zwischen der Behandlungseinrichtung (25) und der Pelletpresse (29) ein Zwischenlager (27) angeordnet ist.

9. Verfahren zum Herstellen von Biomasse-Pellets, bei dem ein Biomasse-Material mit einer Kollermühle (15, 28) zerkleinert wird, bei dem das zerkleinerte Biomasse-Material mit einem oxidierenden Reaktionsstoff behandelt wird, indem das zerkleinerte Biomasse-Material mit einem oxidierenden Reaktionsstoff in flüssiger Form besprüht wird oder indem ein Gasstrom auf das zerkleinerte Biomasse-Material gerichter wird, der einen Teilstrom aus ionisierter Atmosphäre umfasst oder der vollständig aus ionisierter Atmosphäre besteht, und bei dem aus dem behandelten Biomasse-Material Pellets gepresst werden.

10. Verfahren nach Anspruch 9, **dadurch gekennzeichnet, dass** das Biomasse-Material bei der Zerkleinerung durch die Kollermühle (15) einen Feuchtegehalt von wenigstens 20 Gew.-%, vorzugsweise von wenigstens 30 Gew.-% hat.

## Claims

1. System for producing biomass pellets comprising a pan mill (15, 28) for comminuting a biomass material, a treatment means (25, 30), wherein the treatment means (25, 30) is configured for treating the comminuted biomass material with an oxidizing reactant, wherein the treatment means (25) comprises a spray apparatus (26) which is suitable for contacting the oxidizing reactant in liquid form with the comminuted biomass material, or wherein the treatment means (25) is configured for directing a gas stream which comprises a substream of ionized atmosphere or is completely composed of ionized atmosphere onto the comminuted biomass material, and a pellet press (29) for pressing pellets from the treated biomass material.

2. System according to Claim 1, **characterized in that** the pan mill (15, 18) comprises a perforated die (20) in the form of a flat die.

3. System according to either of Claims 1 and 2, **characterized in that** the treatment means (25, 30) is configured for treating the comminuted biomass material with hydrogen peroxide.

4. System according to Claim 1 or 2, **characterized in that** the treatment apparatus (30) comprises an opening (32) which is suitable for contacting the oxidizing reactant in the gaseous state with the biomass material.

5. System according to any of Claims 1 to 4, **characterized in that** the treatment means (25, 30) is configured for treating the comminuted biomass material with ozone.

6. System according to Claim 4 or 5, **characterized in that** the treatment apparatus (30) is configured as a pneumatic conveying means.

7. System according to any of Claims 1 to 6, **characterized in that** a dryer (24) is arranged between the pan mill (15) and the treatment means (25) .

8. System according to any of Claims 1 to 7, **characterized in that** an intermediate storage means (27) is arranged between the treatment means (25) and the pellet press (29).

9. Process for producing biomass pellets in which a biomass material is comminuted with a pan mill (15, 28), in which the comminuted biomass material is treated with an oxidizing reactant by spraying the comminuted biomass material with an oxidizing reactant in liquid form or by directing a gas stream which comprises a substream of ionized atmosphere or is completely composed of ionized atmosphere onto the comminuted biomass material, and in which pellets are pressed from the treated biomass material.

10. Process according to Claim 9, **characterized in that** in the comminution by the pan mill (15) the biomass material has a moisture content of at least 20% by weight, preferably of at least 30% by weight.

## Revendications

1. Système de fabrication de pastilles de biomasse, comprenant un broyeur-granulateur (15, 28) pour désintégrer un matériau biomasse, un dispositif de traitement (25, 30), le dispositif de traitement (25, 30) étant conçu pour traiter avec un réactif oxydant le matériau biomasse désintégré, le dispositif de traitement (25) comprenant un équipement de pulvérisation (26), qui est adapté à la mise en contact du réactif oxydant sous forme liquide avec le matériau biomasse désintégré, ou le dispositif de traitement (25) étant conçu pour envoyer un courant gazeux sur le matériau biomasse désintégré, qui comprend un courant partiel d'une atmosphère ionisée ou qui est entièrement constitué d'une atmosphère ionisée, et une pastilleuse (29), pour presser des pastilles à partir du matériau biomasse traité.

2. Système selon la revendication 1, **caractérisé en ce que** le broyeur-granulateur (15, 18) comprend une matrice perforée (20) sous forme d'une matrice plate.

3. Système selon l'une des revendications 1 à 2, **caractérisé en ce que** le dispositif de traitement (25, 30) est conçu pour traiter avec du peroxyde d'hydrogène le matériau biomasse désintégré.

4. Système selon la revendication 1 ou 2, **caractérisé en ce que** l'équipement de traitement (30) comporte une ouverture (32) qui est adaptée à la mise en contact du réactif oxydant à l'état gazeux avec le matériau biomasse.

5. Système selon l'une des revendications 1 à 4, **caractérisé en ce que** le dispositif de traitement (25, 30) est conçu pour traiter avec de l'ozone le matériau biomasse désintégré.

6. Système selon la revendication 4 ou 5, **caractérisé en ce que** le dispositif de traitement (30) est réalisé sous forme d'un dispositif de transport pneumatique.

7. Système selon l'une des revendications 1 à 6, **caractérisé en ce qu'**un séchoir (24) est disposé entre le broyeur-granulateur (15) et le dispositif de traitement (25).

8. Système selon l'une des revendications 1 à 7, **caractérisé en ce qu'**un magasin intermédiaire (27) est disposé entre le dispositif de traitement (25) et la pastilleuse (29).

9. Procédé de fabrication de pastilles de biomasse, dans lequel un matériau biomasse est désintégré à l'aide d'un broyeur-granulateur (15, 28), dans lequel le matériau biomasse désintégré est traité avec un réactif oxydant, dans lequel le matériau biomasse broyé est aspergé d'un liquide oxydant sous forme liquide, ou dans lequel un courant gazeux est dirigé sur le matériau biomasse désintégré, qui comprend un courant partiel d'une atmosphère ionisée ou est entièrement constitué d'une atmosphère ionisée, et dans lequel des pastilles sont pressées à partir du matériau biomasse traité.

10. Procédé selon la revendication 9, **caractérisé en ce que** le matériau biomasse a, lors de sa désintégration par le broyeur-granulateur (15), une teneur en humidité d'au moins 20 % en poids, de préférence d'au moins 30 % en poids.
